# EUROPEAN PATENT APPLICATION

(11) **EP 4 847 272 A1**
(43) Date of publication of application: **02.12.2026**
(21) Application number: 26179456.4
(22) Date of filing: 19.05.2026
(51) Int. Cl.: B60B 3/16, B25B 13/48, B60B 7/16, F16B 23/00, F16B 41/00

(54) **ANTI-THEFT LOCKING DEVICE FOR VEHICLE WHEELS AND METHOD OF OBTAINING THE SAME**

(30) Priority: 19.05.2025 IT 202500011278
(71) Applicant: Evolution Srl, 20833 Giussano (MB) (IT)
(72) Inventor: GROPPO, Matteo, 12040 SANFRE' (CN) (IT); GROPPO, Lazzaro, 12040 SANFRE' (CN) (IT)
(74) Representative: Robba, Pierpaolo

(57) **Abstract**

Anti-theft locking device (11a;11b), comprising a body (13a;13b) having a first end (15a;15b), a second end (17a;17b), a longitudinal axis ("A"), a head (21a,21b) comprising a distal retaining part (23a;23b) and a proximal driving part (25a;25b) shaped, at its outer perimeter (27a;27b), with a succession of valleys (29) and ridges (31) defining a coupling with provided in the wrench, the radial extension of said valleys (29) and ridges (31) being angularly variable and the axial extension of the radial flange on which said valleys (29) and ridges (31) are provided being greater than the axial extension of the valleys and ridges themselves, whereby a distal portion (33) of said flange free of valleys and ridges is defined, the maximum radial extension of said portion of said flange free of valleys and ridges being greater than the radial extension of the ridge with the smallest radial extension.

## Description

### Technical Field

The present invention relates to an anti-theft locking device for vehicle wheels and to a method of obtaining the same.

In particular, the invention relates to a bolt or nut for securing a wheel to the hub of a vehicle, a method of obtaining the same and an installation kit for said anti-theft device.

### Background Art

In the automotive industry, it is common practice to use locking devices in the form of nuts or bolts to prevent fraudulent detachment of vehicle parts. One specific application of these nut- and bolt-type devices involves locking the wheels of a vehicle, particularly those wheels equipped with alloy rims, which are notoriously expensive and a target for thieves. According to prior art, to prevent the theft of vehicle wheels, at least one of the standard nuts or bolts used to secure the wheel to the hub is replaced with a corresponding one of the anti-theft type. Typically, each vehicle wheel has four or five nuts or bolts. These locking devices are typically designed to be received in a specific seat or hole provided on the alloy rim of the wheel and comprise a cylindrical body having either a threaded longitudinal bore for engagement of the device on a threaded stud, when they are made as nuts, or a threaded longitudinal shaft for engagement in a threaded hole, when they are made as bolts. The hole in the nut can be either a through-hole or a blind hole, depending on the applications. Furthermore, still according to prior art, the cylindrical body is provided with a head portion having an axial seat, for example, made as a groove with irregular profile, intended for being engaged by a tool or proprietary actuating wrench. Such locking devices are further equipped with a proprietary wrench suitable for being received in the seat provided on the head portion of the locking device. The proprietary actuating wrench also has an outer surface having a shape adapted to engage with a standard wrench, for example, a tube wrench with hexagonal head, with which it is possible to rotate the actuating wrench and, by means thereof, the anti-theft nut or bolt.

To prevent the nut or bolt from being rotated without the use of the complementary anti-theft wrench, it is known to provide a bushing fitted on the head of the nut or bolt so as to be idly rotatable relative to said head.

Thanks to the presence of the bushing that is idly mounted, i.e., free to rotate about the body of the nut or bolt, it is impossible to grasp and unscrew the nut or bolt from the outside with a conventional tool such as, for example, a pair of pliers or the like.

Obviously, if it were possible to rotate the head of the nut or bolt without using the complementary wrench, the anti-theft function of the device would be nullified.

Generally, when the locking device is housed in the seat provided on the wheel rim, an annular gap is defined between the inner surface of the seat and the outer surface of the locking device. This annular gap facilitates access of the proprietary actuating wrench, which, engaging in said seat, allows the locking device to be rotated. The width of the annular gap provided between the inner surface of the seat on the alloy rim and the outer surface of the locking device can be controlled by dimensioning the diameter of the head portion of the locking device according to the diameter of the seat provided on the wheel rim.

US2020049189 and WO2015159034 show corresponding examples of anti-theft devices of the above-mentioned type.

One of the problems encountered when using known anti-theft devices of the type described stems from the fact that when the anti-theft wrench is fitted on the device, it may become jammed or misaligned and, if the wrench is then turned, this can cause the device and/or the wrench to become deformed or even break. Added to this is the fact that the need to reduce costs and weight by using less material results in a general structural weakening of the anti-theft devices and corresponding wrench.

A primary object of the invention is therefore to find a solution to the aforementioned problems and to overcome the drawbacks of prior art.

Another object of the invention is to provide an anti-theft device of the type mentioned above that is capable of withstanding particularly severe theft attempts, while allowing for a wide variety of different configurations for the mating groove.

A further object of the invention is to provide an anti-theft device of the type mentioned above that can be made either as a threaded nut or as a bolt having a threaded shaft.

Still another object of the invention is to provide such a device whose groove can hardly be accessed from the outside, so as to reduce the possibilities of theft.

A still further object of the present invention is to provide such a device that is simple and inexpensive to manufacture and is therefore suitable for being produced in large quantities.

These and other objects are achieved with the device according to the invention as claimed in the appended claims.

Further features of the anti-theft locking device according to the present invention will become clearer from the ensuing detailed description, which refers to a purely illustrative embodiment thereof.

### Summary of the Invention

The anti-theft locking device for vehicle wheels according to the present invention essentially comprises a substantially cylindrical metal body, preferably made of steel, in which there are defined a first end, a second end and a threaded surface extending axially about a longitudinal axis of symmetry of the device.

Depending on whether said device is provided in the form of a nut or bolt, the corresponding thread is made as a male thread or a female thread, respectively.

The locking device is further provided with a head comprising a distal retaining part and a proximal driving part, the latter being in the form of a radial flange intended to engage with a removable anti-theft wrench.

With the anti-theft wrench engaged in the driving part of the locking device it is possible to rotate the device about its own axis to cause screwing or unscrewing of the device.

The device further comprises a swivel bushing idly mounted around the head of the anti-theft locking device.

The proximal driving part is shaped, at its outer perimeter, with a succession of valleys and ridges defining together a proprietary engagement coupling combination for corresponding ridges and valleys of the anti-theft wrench.

By the term 'proprietary' it is meant that the combination defined by the succession of ridges and valleys defines a profile that has no correspondence in shapes and profiles commonly used in the field of locking devices such as nuts and bolts. The proprietary combination will therefore preferably be irregular, with valleys and ridges that are not all the same - for example, some will be beveled and others will be sharp-edged - and with different pitch and profile angle, according to the perimeter portion concerned.

Preferably, according to the invention, the proprietary combination comprises an odd succession of valleys and ridges.

According to the invention, the radial extension of said valleys and ridges is angularly variable around the longitudinal axis of symmetry and the axial extension of the radial flange on which said valleys and ridges are provided, i.e., of the driving part for engagement of the wrench, is greater than the axial extension of the valleys and ridges themselves, whereby a portion of said flange free of valleys and ridges is defined between said valleys and ridges and said distal retaining part. If, for example, the axial extension of the flange is 5.0 mm, the axial extension of the flange portion provided with valleys and ridges has an axial extension of about 3.0 mm and the axial extension of the flange portion free of valleys and ridges has an axial extension of 2.0 mm.

In addition, still according to the invention, the maximum radial extension of said portion of said flange free of valleys and ridges is greater than the radial extension of the ridge with the smallest radial extension.

According to the invention, advantageously, the proximal driving part is produced from a substantially cylindrical metal body through a cold-molding process and subsequent finishing by blanking.

According to the invention, the driving part is plastically deformed during the molding process to form a corresponding radial flange on which a proximal annular portion provided with valleys and ridges and a distal annular portion free of valleys and ridges are defined.

According to the invention, the radial extension of the second distal portion free of valleys and ridges is such as to define an axial abutment surface extending radially outward from at least one of the ridges.

According to the invention, the radial extension of the valleys and ridges is angularly variable around the axis "A" and therefore the radial extension of the second distal portion free of valleys and ridges will be greater than the radial extension of the ridge with the smallest radial extension, so as to define, at least at said ridge with the smallest radial extension, said axial abutment surface.

Advantageously, according to the invention, an axial abutment surface is defined radially outside the radial extension of the valleys and ridges, at least outside the ridge or ridges with the smallest radial extension, so that the axial sliding of the wrench is stopped by said abutment surface when the wrench is fitted on the proximal driving part.

According to the invention, the radial extension of the abutment surface is preferably angularly constant, i.e., the flange portion free of valleys and ridges comprises a circular circumferential perimeter, and the radial extension of the valleys and ridges is preferably angularly variable. In addition, the radial extension of the abutment surface is greater than the radial extension of the ridge with the smallest radial extension and is smaller than or equal to the radial extension of the ridge with the greatest radial extension. Thus, advantageously, according to the invention, the ridges with the greatest radial extension determine a longer lever arm that is more conducive to rotating the anti-theft locking device, whereas only the ridges with the smallest radial extension are associated with an abutment surface for stabilizing the wrench during rotation. Advantageously, thanks to this variation in the radial extension of the valleys and ridges and to the limited radial extension not exceeding that of the ridges with the greatest radial extension, optimal stability of the wrench during rotation is simultaneously achieved without excessively compromising the weight of the device.

### Brief Description of Drawings

Some preferred embodiments of the invention will be described by way of non-limiting example with reference to the annexed figures, in which:
- Fig.1 is a lateral plan view of the device in a first embodiment of the invention;
- Fig.2 is a sectional view taken along a longitudinal plane of the device of Fig.1;
- Fig.3 is a top plan view of the device of Fig.1;
- Fig.4 is a lateral plan view of the device in a second embodiment of the invention;
- Fig.5 is a sectional view taken along a longitudinal plane of the device of Fig.4;
- Fig.6 is a top plan view of the device of Fig.4;
- Fig.7 is a lateral plan view of the anti-theft wrench;
- Fig.8 is a sectional view taken along a longitudinal plane of the anti-theft wrench of Fig.7;
- Fig.9 is a bottom plan view of the anti-theft wrench of Fig.7.

In all figures, the same reference numerals have been used to distinguish identical or functionally equivalent components.

### Description of Some Preferred Embodiments of the Invention

Referring to the annexed figures, an anti-theft locking device according to the invention for securing a wheel to the hub of a vehicle is shown.

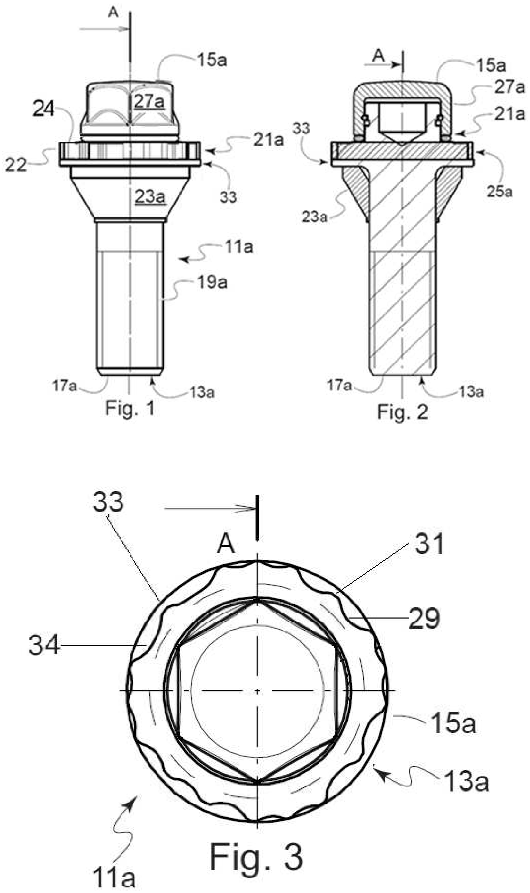

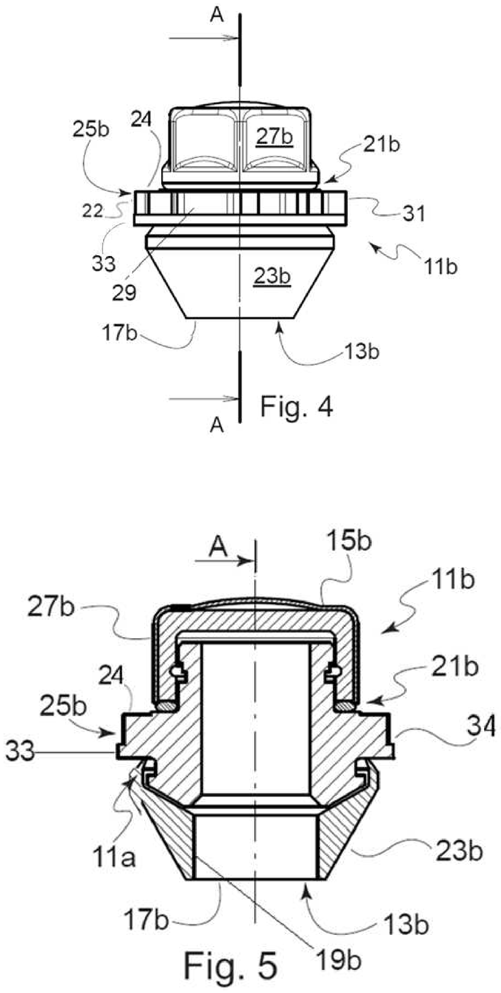

The locking device has been indicated as a whole with reference numeral 11a when made as a bolt (Figs. 1, 2 and 3) and 11b when made as a nut (Figs.4 and 5). In the Figures, identical reference numerals indicate identical or functionally equivalent elements and are accompanied by the letter "a" when they refer to the device made as a bolt and "b" when they refer to the device made as a nut.

Referring in particular to Figs. 1 to 3, the device 11a made as a bolt comprises a substantially cylindrical metal body, preferably made of steel, 13a in which there are defined a first end 15a, a second end 17a and a male threaded surface 19a extending axially about a longitudinal axis of symmetry "A" of the device.

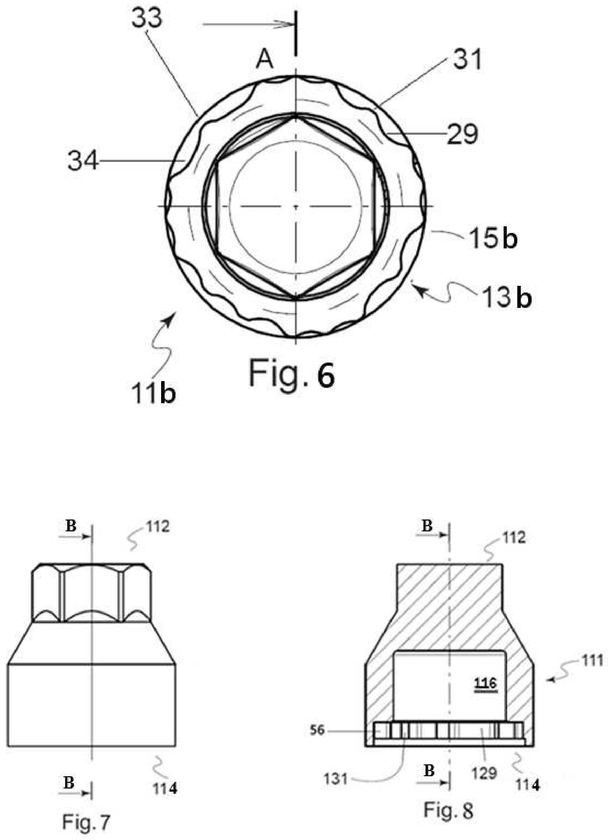

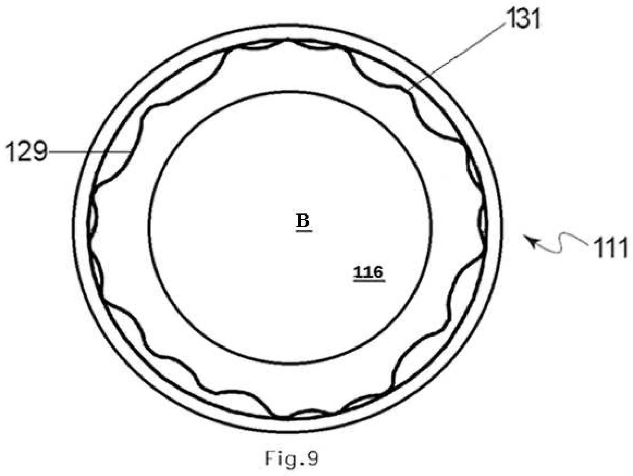

The bolt 11a is further provided with a head 21a comprising a distal retaining part 23a and a proximal driving part 25a made as a radial flange intended to engage with a removable anti-theft wrench 111 (Figs. 7, 8, and 9).

With the anti-theft wrench 111 engaged in the driving part 25a of the body of the locking device 11a it is possible to rotate the bolt about its own axis "A" to cause screwing or unscrewing of the device.

The bolt 11a further comprises a swivel bushing 27a idly mounted about the head 21a of the anti-theft locking device.

The proximal driving part 25a is shaped at its outer perimeter with a succession of valleys 29 and ridges 31, which together define a proprietary engagement coupling combination for corresponding valleys 129 and ridges 131 provided in the anti-theft wrench 111.

The engagement coupling combination defined by the succession of valleys and ridges of the outer perimeter of the driving part 25a is arranged to receive in engagement coupling the anti-theft wrench 111.

With reference to the annexed figures, the radial extension of said valleys 29 and ridges 31 is angularly variable around the longitudinal axis of symmetry "A". In other words, a circumference centered on the axis "A" and tangent to the ridges with the greatest radial extension outward of the flange, is not tangent to all the ridges. The same applies to the valleys that are tangent to more circumferences, all centered on the axis "A" but of different diameters.

The axial extension of the radial flange, i.e., of the proximal driving part 25a, 25b on which sad valleys and ridges are provided, for engagement of the anti-theft wrench 111, is greater than the axial extension of the valleys 29 and ridges 31 themselves, whereby a portion of said flange that is left free of valleys and ridges is defined between said valleys and said ridges and the distal retaining part 23a, 23b.

In the preferred embodiment illustrated, the total axial extension, i.e., parallelly to the axis "A" of the flange or driving part 25a, 25b, is 5.0 mm, whereas the axial extension of the flange portion provided with valleys and ridges has an axial extension of about 3.0 mm so that the axial extension of the remaining flange portion free of valleys and ridges has an axial extension of 2.0 mm.

These dimensions are provided by way of non-limiting example only and may essentially take on any ratio suitable for the purpose. Another example may comprise a flange proximal portion provided with valleys and ridges and having a thickness of 4.0 mm and a flange distal portion with a thickness of 1.0 mm, the driving part having as a result a total thickness or axial extension of 5.0 mm.

In addition, still according to the invention, the maximum radial extension of said proximal portion of said flange free of valleys and ridges is greater than the radial extension of the ridge 31 with the smallest radial extension.

According to the invention, advantageously, the proximal driving part 25a, 25b is produced from a substantially cylindrical metal body through a cold-molding process and subsequent finishing by blanking.

According to the invention, the driving part is plastically deformed during the molding process to form a corresponding radial flange on which a proximal annular portion provided with valleys 29 and ridges 31 and a distal annular portion 33 free of valleys and ridges are defined.

According to the invention, the radial extension of the second distal portion 33 free of valleys and ridges is such as to define an axial abutment surface 34 extending radially outward from at least one of the ridges 31.

According to the invention, the radial extension of the valleys 29 and ridges 31 is angularly variable around the axis "A" and therefore the radial extension of the second distal portion 33 free of valleys and ridges will be greater than the radial extension of the ridge 31 with the smallest radial extension, so as to define, at least at said ridge 31 with the smallest radial extension, said axial abutment surface 34.

Advantageously, according to the invention, an axial abutment surface 34 is defined radially outside the radial extension of the valleys 29 and ridges 31, at least outside the ridge or ridges with the smallest radial extension, so that the axial sliding of the wrench 111 is stopped by said abutment surface 34 when the wrench 111 is fitted on the proximal driving part 25a, 25b.

With reference to the illustrated embodiment, the radial extension of the abutment surface 34 is angularly constant, i.e., the flange distal portion 33 free of valleys 29 and ridges 31 comprises a circular circumferential perimeter, and the radial extension of the valleys 29 and ridges 31 provided on the proximal portion of the driving part is preferably angularly variable. In addition, the radial extension of the abutment surface 34 is greater than the radial extension of the ridge 31 with the smallest radial extension and is smaller than or equal to the radial extension of the ridge 31 with the greatest radial extension.

The flange distal portion 33 free of valleys 29 and ridges 31 thus defines a circular disk-shaped abutment surface 34 tangent, with its outer perimeter, to the generatrixes of an imaginary cylinder internally tangent to at least one of said ridges 31.

In the illustrated embodiment, the flange distal portion 33 free of valleys 29 and ridges 31 defines an abutment surface 34 for an anti-theft wrench 111 when said wrench is fitted on the proximal driving part 25a,25b of said device.

Still referring to the illustrated embodiment, the outer lateral surface 22 of the valleys 29 and ridges 31 is perpendicular to the abutment plane defined by the abutment surface 34 of said flange portion free of valleys 29 and ridges 31.

In addition, the generatrixes of the outer lateral surface 22 of the valleys 29 and ridges 31 are parallel to one another and parallel to the longitudinal axis "A" of the device 11a, 11b.

The flange proximal portion provided with valleys 29 and ridges 31 further comprises a flat proximal base 24 perpendicular to said generatrixes and said longitudinal axis "A".

Thus, advantageously, according to the invention, the ridges 31 with the greatest radial extension determine a longer lever arm that is more conducive to rotating the anti-theft locking device, whereas only the ridges 31 with the smallest radial extension are associated with an abutment surface 34 for stabilizing the wrench 111 during rotation. Advantageously, thanks to this variation in the radial extension of the valleys 29 and ridges 31 and to the limited radial extension, not exceeding that of the ridges with the greatest radial extension, of the abutment surface 34, optimal stability of the wrench during rotation is simultaneously achieved without excessively compromising the weight, the manufacturing cost and the robustness of the device.

The device and the wrench can be combined into an installation kit comprising at least one anti-theft locking device 11a,11b made according to any of claims 1 to 7 and a removable anti-theft wrench 111 with which said device 11a,11b can be rotated. In the kit, the wrench 111 comprises a substantially cylindrical metal body in which there are provided a first proximal end 112, a second distal end 114, a longitudinal axis "B", and an axial seat 116 open to the outside at the second distal end 114 and extending axially around said longitudinal axis "B". The axial seat has an engagement coupling combination complementary to the one of the locking device and defined by a succession of valleys 129 and ridges 131 along the inner perimeter of the axial seat 116 and arranged to engage the engagement coupling combination of the driving part of the device.

According to the invention, the radial extension of said valleys 129 and ridges 131 is angularly variable around said axis "B" and the axial extension of the seat 116 is greater than the axial extension of said valleys and ridges, whereby inside said seat there is defined, starting from its opening, a first portion of said seat 116 free of valleys and ridges, a seat portion provided with valleys and ridges and a second seat portion free of valleys and ridges. The outer perimeter of the first portion is complementary to the outer perimeter of the flange portion free of valleys 29 and ridges 31 of the locking device, and the cross-section of the second seat portion free of valleys and ridges is such as to define an annular abutment surface for the flange portion provided with valleys 29 and ridges 31 of the locking device.

The locking device, in any of its preferred embodiments, can be made of any suitable material, but it will preferably be made of steel.

Advantageously, the anti-theft locking device according to the invention can be achieved by simple and inexpensive intervention in traditional manufacturing steps.

Although the invention has been described above with particular reference to some of its embodiments provided only as non-limiting examples, numerous modifications and variations will be apparent to a person skilled in the art in the light of the above description. The present invention, therefore, is intended to encompass all modifications and variations within the reach of the person skilled in the art, without thereby departing from the scope of the invention itself as defined in the appended claims.

## Claims

1. Anti-theft locking device (11a;11b) for securing a wheel to the hub of a vehicle, comprising a substantially cylindrical metal body (13a;13b), in which there are defined a first end (15a;15b), a second end (17a;17b), a longitudinal axis ("A"), a threaded surface (19a;19b) extending axially about said longitudinal axis ("A") and having a female or male thread, depending on whether said device (11a; 11b) is made as a nut (11a) or bolt (11b), and a head (21a,21b) comprising a distal retaining part (23a;23b) and a proximal driving part (25a;25b) in the form of a radial flange intended to engage with a removable anti-theft wrench (111) with which said device (11a; 11b) can be rotated, and a swivel bushing (27a;27b) idly mounted around the head (21a;21b) of the anti-theft locking device (11a;11b), wherein said proximal driving part (25a;25b) is shaped at its outer perimeter (27a;27b) with a succession of valleys (29) and ridges (31), wherein said valleys and ridges define an engagement coupling combination with corresponding valleys (129) and ridges (131) provided in the anti-theft wrench (111), **characterized in that** the radial extension of said valleys (29) and ridges (31) is angularly variable around said axis ("A") and the axial extension of the radial flange on which said valleys (29) and ridges (31) are provided is greater than the axial extension of the valleys (29) and ridges (31) themselves (29,31), whereby a distal portion (33) of said flange free of valleys (29) and ridges (31) is defined between said valleys (29) and ridges (31) and said distal retaining part (23a,23b), and **in that** the maximum radial extension of said portion (33) of said flange free of valleys and ridges is greater than the radial extension of the ridge (31) with the smallest radial extension.

2. Device according to claim 1, wherein the flange distal portion (33) free of ridges (29) and valleys (31) defines a circular disk-shaped abutment surface (34) tangent, with its outer perimeter, to the generatrixes of an imaginary cylinder internally tangent to at least one of said ridges (31).

3. Device according to claim 1, wherein the flange distal portion (33) free of valleys (29) and ridges (31) defines an abutment surface (34) for an anti-theft wrench (111) when said wrench if fitted on the proximal driving part (25a,25b) of said device.

4. Device according to claim 1, wherein the outer lateral surface (22) of the valleys (29) and ridges (31) is perpendicular to the abutment plane defined by the abutment surface (34) of said flange portion (33) free of valleys (29) and ridges (31).

5. Device according to claim 4, wherein the generatrixes of the outer lateral surface (22) of the valleys (29) and ridges (31) are parallel to one another and parallel to the longitudinal axis ("A").

6. Device according to claim 5, wherein the flange proximal portion provided with valleys (29) and ridges (31) comprises a flat proximal base (24) perpendicular to said generatrixes and said longitudinal axis ("A").

7. Device according to any preceding claims, wherein the distal retaining part (23a;23b) and the proximal driving part (25a;25b) form a single body, i.e., they are made as one monolithic piece.

8. Method of obtaining an anti-theft locking device according to any of claims 1 to 7, wherein a step of provision of a substantially cylindrical metal body and a step of plastic deformation by moulding are provided.

9. Method according to claim 8, wherein the plastic deformation operation takes place by using a die or matrix and a punch which simultaneously imprint the shape to the valleys (29) and ridges (31) of the flange portion provided with valleys and ridges and to the flange portion free of valleys and ridges.

10. Kit comprising at least one anti-theft locking device (11a, 11b) made according to any of claims 1 to 7 and a removable anti-theft wrench (111) with which said device (11a;11b) can be rotated, wherein the wrench (111) comprises a substantially cylindrical metal body in which there are provided a first proximal end (112), a second distal end (114), a longitudinal axis ("B"), an axial seat (116) open to the outside at the second distal end (114) and extending axially around said longitudinal axis ("B"), said axial seat having an engagement coupling combination complementary to the one of the locking device and defined by a succession of valleys (129) and ridges (131) along the inner perimeter of the axial seat (116) and arranged to engage the engagement coupling combination of the driving part of the device, **characterized in that** the radial extension of said valleys (129) and ridges (131) is angularly variable around said axis ("B") and the axial extension of the seat (116) is greater than the axial extension of said valleys and ridges, whereby inside said seat there is defined, starting from its opening, a first seat portion free of valleys and ridges, a seat portion provided with valleys and ridges and a second seat portion free of valleys and ridges, wherein the outer perimeter of the first seat portion free of valleys and ridges is complementary to the outer perimeter of the flange portion free of valleys and ridges of the locking device, and wherein the cross-section of the second seat portion free of valleys and ridges is such as to define an annular abutment surface for the flange portion provided with valleys and ridges of the locking device.
